# EUROPÄISCHE PATENTSCHRIFT

(11) **EP 1 500 852 B1**
(45) Veröffentlichungstag und Bekanntmachung des Hinweises auf die Patenterteilung: **12.07.2006**
(21) Anmeldenummer: 04011133.8
(22) Anmeldetag: 11.05.2004
(51) Int. Cl.: F16J 15/08

(54) **Zylinderkopfdichtung**
Cylinder head gasket
Joint de culasse

(30) Priorität: 25.07.2003 DE 10334044
(43) Veröffentlichungstag der Anmeldung: 26.01.2005
(73) Patentinhaber: Federal-Mogul Sealing Systems GmbH, 57562 Herdorf (DE)
(72) Erfinder: Heilig, Markus, 57518 Betzdorf (DE); Gasch, Martin, 40723 Hilden (DE)

(56) Entgegenhaltungen:
- EP-A- 0 695 897
- DE-C- 19 513 361
- US-B1- 6 182 976

## Beschreibung

Die Erfindung betrifft eine Dichtungsanordnung, enthaltend ein mehrlagige Zylinderkopfdichtung und Zylinderlaufbuchsen bei Brennkraftmaschinen, mit mindestens einer zylinderblockseitig angeordneten ersten Lage, die entsprechend den Brennkammern der Brennkraftmaschine Durchgangsöffnungen aufweist und mit einem Durchmesser versehen ist, der minimal dem Außendurchmesser der Laufbuchse entspricht, mindestens einer sich daran anschließenden weiteren Lage, deren Durchgangsöffnung einen Durchmesser aufweist, der kleiner als der Durchmesser der ersten Lage ausgebildet ist, derart, dass sich die weitere Lage bis in den Bereich der radialen Wandstärke der Laufbuchse erstreckt, mindestens einem mit mindestens einer der weiteren Lagen in Wirkverbindung stehenden ringförmigen Stopperelement.

Der DE-C 195 39 245 ist ein Dichtungssystem für Brennkraftmaschinen zur Abdichtung eines Spaltes zwischen Zylinderkopf und Zylinderblock einer Brennkraftmaschine zu entnehmen, mit einem in den Spalt ragenden Überstand einer Zylinderlaufbuchse auf dem mindestens eine Lage einer metallischen Flachdichtung angeordnet ist, um im Bereich einer Brennraumöffnung einen gegenüber dem übrigen Bereich erhöhten Verspannungszustand zu erzielen. Die Flachdichtung weist eine äußere Dichtungslage mit einer die Brennraumöffnung umschließenden Sicke auf, derart, dass die Sicke radial außerhalb der Zylinderlaufbuchse verläuft und über die axiale Höhe des Überstandes der Zylinderlaufbuchse abgestützt ist.

Der EP-A 0 939 256 ist ein Dichtungssystem zu entnehmen, bestehend aus einem Motorblock eines Verbrennungsmotors, einem Zylinderkopf und einer metallischen Zylinderkopfdichtung. Die Zylinderbohrungen des Motorblocks sind mit Laufbuchsen versehen, die einen Buchsenvorstand aufweisen. Die Zylinderkopfdichtung trägt den Zylinderbohrungen entsprechende Zylinderöffnungen und umfasst zwei gesickte Deckbleche, die jeweils mindestens eine, die Zylinderöffnung radial außerhalb der Laufbuchse vollständig umschließende Sicke aufweisen sowie eine zwischen den beiden Deckblechen angeordnete Distanzlage beinhalten. Im Bereich zwischen Laufbuchse und Zylinderkopf weist die Distanzlage einen topographisch ausgebildeten Abstützbereich auf, der beispielsweise mindestens eine die Zylinderöffnung vollständig umschließende Sicke und/oder Rillierung umfasst.

In der JP-A 8 178 070 wird eine Zylinderkopfdichtung für Brennkraftmaschinen abgehandelt, wobei der Zylinderblock ebenfalls mit Laufbuchsen versehen ist. Die Zylinderkopfdichtung ist hierbei einlagig ausgebildet und laufbuchsenseitig mit einer umlaufenden Sicke versehen. Radial vor der Sicke ist ein Stopperelement angeordnet, das entweder zusammen mit der Lage auf der Laufbuchse aufliegt oder vor der Laufbuchse endet. In letzterem Fall ist die Lage mit einer Halbsicke versehen, die auf der Stirnfläche der Laufbuchse aufliegt.

Die EP 0695 897 A offenbart eine Zylinderkopfdichtung mit einer dem Zylinderkopf zugewandten Lage, die sich nur teilweise über das Stopperlement erstreckt. Die Zylinderkopfdichtung erstreckt sich bis in den Bereich der Zylinderlaufbuchse und verhindert ein Wachsen der Laufbuchsen in axialer Richtung, wodurch Spannungen in der Laufbuschse auftreten können.

Allen genannten Dichtsystemen gemeinsam ist, dass es bei einem Wachsen der Laufbuchsen in Folge thermischer Ausdehnung hier zu erheblichen Spannungen zwischen Laufbuchse und Zylinderkopfdichtung kommt. Dies gilt insbesondere bei der Abdichtung von Laufbuchsen in Vollaluminium-Dieselmotoren, bei denen im Betrieb die Laufbuchsen in der axialen Höhe gegenüber dem Zylinderblock wachsen und auch schrumpfen können. Beim Stand der Technik werden die Laufbuchsen an einer axialen Ausdehnung durch die Zylinderkopfdichtung selber gehindert. Dies kann einerseits schädlich für die jeweilige Laufbuchse sein oder aber die Schraubenkraft am Anfang drastisch reduzieren, so dass mit vorzeitigem Ausfall der Zylinderkopfdichtung und/oder der jeweiligen Laufbuchse zu rechnen ist.

Der Erfindung liegt die Aufgabe zugrunde, eine mehrlagige Zylinderkopfdichtung bereit zu stellen, die in der Lage ist, eine axiale Ausdehnung der jeweiligen Laufbuchse zu ermöglichen ohne dass Schäden an der Laufbuchse oder aber der Zylinderkopfdichtung selber auftreten können.

Diese Aufgabe wird durch die Merkmale des Patentanspruch 1 gelöst.

Vorteilhafte Weiterbildungen des Erfindungsgegenstandes sind den Unteransprüchen zu entnehmen.

Durch die erfindungsgemäßen Maßnahmen ist die mehrlagige Zylinderkopfdichtung vollständig aus dem Verspannungsverbund entkoppelt, das heißt die Laufbuchsen können sich axial frei bewegen und stoßen nicht mehr an die Lage(n) der Zylinderkopfdichtung an. Bedingt durch die angestrebten Durchmesserverhältnisse einerseits der Lagen der Zylinderkopfdichtung und andererseits der jeweiligen Laufbuchse, kann das Schadvolumen im Brennraum weiterhin minimiert werden. Würde die Zylinderkopfdichtung einen einheitlichen Bohrungsdurchmesser haben, der größer wäre als der Laufbuchsenaußendurchmesser, dann wäre das für die Motorverbrennung nachteilige Schadvolumen zu groß.

Schäden an der jeweiligen Laufbuchse und/oder der Zylinderkopfdichtung werden, verglichen mit dem Stand der Technik, zumindest minimiert, wenn nicht gar unterbunden.

Der Erfindungsgegenstand ist anhand eines Ausführungsbeispieles in der Zeichnung dargestellt und wird wie folgt beschrieben. Es zeigen:

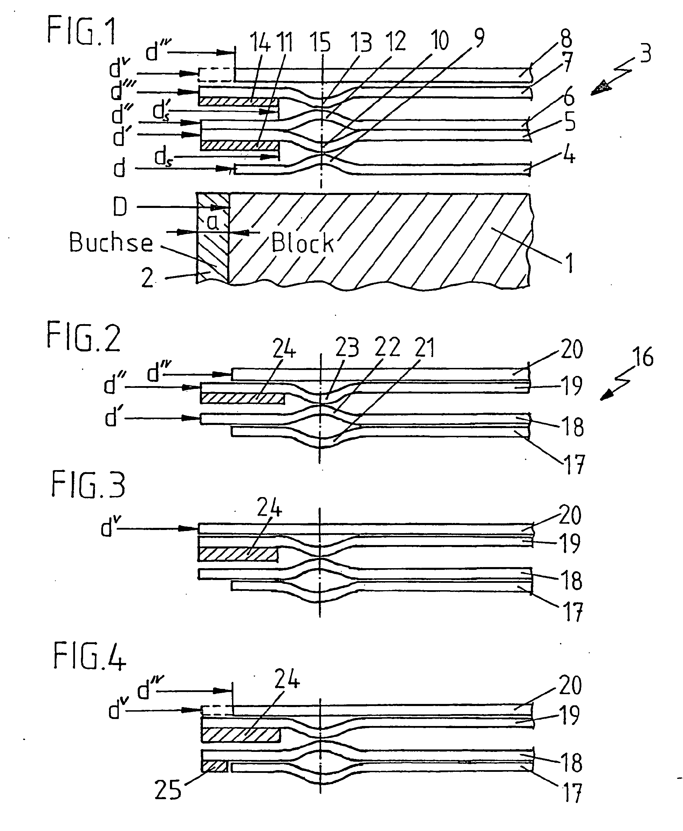

- Figuren 1 bis 4: unterschiedliche Ausführungsformen des Erfindungsgegenstandes.

Figur 1 zeigt einen nur angedeuteten Zylinderblock 1 einer Brennkraftmaschine, die mit einer Laufbuchse 2 versehen ist. Die Laufbuchse 2 unterliegt im Betriebszustand unter thermischen Einflüssen einer axialen Ausdehnung, so dass sie gegenüber dem Zylinderblock 1 wachsen oder unter Umständen auch schrumpfen kann. Um insbesondere einem axialen Wachsen begegnen zu können, ohne dass sich schädliche Einflüsse auf die Laufbuchse 2 oder die hier nur im Schnitt angedeutete Zylinderkopfdichtung 3 einstellen, ist beim Aufbau der Zylinderkopfdichtung 3 entsprechende Vorsorge zu treffen.

Im Beispiel gemäß Figur 1 kommen fünf Lagen 4, 5, 6, 7, 8 zum Einsatz. Die dem Zylinderblock 1 zugewandte erste Lage 4, ist im Bereich der Laufbuchse 2 mit einer umlaufenden Vollsicke 9 versehen. Laufbuchsenseitig hat die erste Lage 4 einen Innendurchmesser d, der geringfügig größer ist, als der Außendurchmesser D der Laufbuchse 2. Eine Berührung zwischen Laufbuchse 2 und erster Lage 4 ist somit nicht möglich. Die zweite Lage 5 ist ebenfalls mit einer umgekehrt zur ersten Vollsicke 9 ausgebildeten Vollsicke 10 versehen. Die zweite Lage 5 weist laufbuchsenseitig einen Innendurchmesser d' auf, der im Bereich der radialen Wandstärke a der Laufbuchse 2 endet. Die zweite Lage 5 ist laufbuchsenseitig mit einem Stopperelement 11 versehen, das von seinen Abmessungen her dem Innendurchmesser d' der zweiten Lage 5 entspricht. Der Außendurchmesser ds ist hierbei größer als der Innendurchmesser d der ersten Lage 4 ausgebildet, so dass das Stopperelement 11 mit einer Überdeckung gegenüber der ersten Lage 4 vorgesehen ist. Im Einbauzustand wird das Stopperelement 11 dann mit dem Überstand auf der ersten Lage 4 zur Auflage kommen, so dass genügend axialer Raum zur gegebenenfalls axial wachsenden Laufbuchse 2 gegeben ist. In gleichem Maße wird eine gute Abdichtung zwischen der ersten Lage 4 und dem Stopperelement 11 realisiert, wodurch das Schadvolumen im Brennraum reduziert werden kann.

Die sich daran anschließende Lage 6 ist ebenfalls mit einer Vollsicke 12 versehen und weist einen Innendurchmesser d" auf, der demjenigen der Lage 5 entspricht. Die Vollsicke 12 ist wiederum umgekehrt zur Vollsicke 10 der Lage 5 vorgesehen.

Die sich daran anschließende Lage 7 weist auch eine Vollsicke 13 auf, die umgekehrt zur Vollsicke 12 der Lage 6 positioniert ist. Der Innendurchmesser d"' entspricht demjenigen der Lagen 5 und 6. Die Lage 7 ist mit einer Auflage 14 versehen, wobei der Durchmesser ds' der Auflage 14 dem Durchmesser ds des Stopperelementes 11 entspricht. Die Auflage 14 schließt bündig mit dem Innendurchmesser d'" der Lage 7 ab. Die Lagen 4 bis 7 können als Funktionslagen bezeichnet werden.

Die letzte Lage 8 (Decklage) ist in diesem Beispiel ungesickt ausgebildet und weist einen Innendurchmesser d^{IV} auf, der im Bereich der radialen Wandstärke des Stopperelementes 11, respektive der Auflage 14, vorgesehen ist. Bedarfsweise kann jedoch auch ein Durchmesser d^{V} gewählt werden, der den Innendurchmessern d' bis d'" der Lagen 5 bis 7 entspricht. Der Fachmann wird den Aufbau der einzelnen Lagen 4 bis 8 dem jeweiligen Anwendungsfall entsprechend gestalten. Wesentlich ist jedoch, dass ein axiales Wachsen der Laufbuchse 2 durch die Zylinderkopfdichtung 3, respektive deren Lagen 4 bis 8, in keiner Weise behindert wird und dass darüber hinaus durch die gewählten Durchmesserverhältnisse einerseits der Lagen 4 bis 8 und andererseits der Laufbuchse 2 das Schadvolumen im Brennraum reduziert werden kann. Zu erwähnen ist noch, dass in diesem Beispiel die Vollsicken 9, 10, 12, 13 in einer radialen Ebene 15, das heißt axial aufeinanderliegend, angeordnet sind.

Figur 2 zeigt einen alternativen Aufbau einer Zylinderkopfdichtung 16. Selbige weist in diesem Beispiel vier Lagen 17, 18, 19, 20 auf. Auch hier sind die Funktionslagen bildenden Lagen 17 bis 19 mit Vollsicken 21, 22, 23 versehen, während die als Decklage ausgebildete Lage 20 ungesickt ist. Von den Innendurchmesserverhältnissen her entspricht die erste Lage 17 der Lage 4 gemäß Figur 1, das heißt, sie kommt nicht mit der hier nicht weiter dargestellten Laufbuchse in Kontakt. Die Lage 18 entspricht vom Innendurchmesser d' her der Lage 5 gemäß Figur 1, ist jedoch mit keinem Stopperelement versehen. Der Innendurchmesser d" der Lage 19 entspricht demjenigen der Lage 6 gemäß Figur 1, weist jedoch ein Stopperelement 24 auf, das innendurchmesserseitig bündig mit der Lage 19 abschließt. Das Stopperelement 24 weist eine derartige radiale Wandstärke auf, dass es einerseits vollständig auf der darunter liegenden Lage 18 aufliegt und andererseits zumindest partiell die erste Lage 17 überdeckt. Die als Decklage ausgebildete Lage 20 ist mit einem Innendurchmesser d^{IV} versehen, wie er durch die Decklage 8 gemäß Figur 1 gebildet ist.

Figur 3 bildet eine Variante zu Figur 2, so dass hier gleiche Bezugszeichen zum Einsatz gelangen. Es sind wiederum vier Lagen 17, 18, 19, 20 vorgesehen. Der Unterschied zu Figur 2 ist darin begründet, dass die als Decklage ausgebildete Lage 20 mit einem Innendurchmesser d^{V} versehen ist, der dem Innendurchmesser d" gemäß Figur 2 entspricht.

Figur 4 zeigt eine weitere Alternative zu den Figuren 2 und 3. Insofern gelten bezüglich der Lagen 17 bis 20 auch hier die gleichen Bezugszeichen. Der sickenmäßige Aufbau entspricht demjenigen gemäß Figur 2. Wie bei den Lagen 17 gemäß Figuren 2 und 3 verbleibt auch bei Figur 4 die Lage 17 außerhalb des Außendurchmessers der nicht weiter dargestellten Laufbuchse. Eine derartige Zylinderkopfdichtung kann zum Einsatz gelangen, sofern die Laufbuchse 2 nicht bündig mit dem Zylinderblock 1 abschließt, sondern mit vorgebbarem Abstand dazu endet. Das an der Lage 19 angeformte Stopperelement 24 weist ein solche radiale Wandstärke auf, dass es die Auflage 25 überragt, somit satt auf der Lage 18 aufliegt und die erste Lage 17 zu einem großen Teil mit überdeckt. Der Innendurchmesser der als Decklage ausgebildeten Lage 20 kann entweder d^{IV} oder d^{V} entsprechen. Die Stopperelemente 11, 24 können durch Schweißen, z. B. Punktschweißen, mit der zugehörigen Lage 5, 7, 18, 19 verbunden werden. Auch hier wird der Fachmann die geeignete Auswahl treffen.

### Bezugszeichenliste

1. Zylinderblock d Innendurchmesser Lage 1,17
2. Laufbuchse d' Innendurchmesser Lage 2,18
3. Zylinderkopfdichtung d"Innendurchmesser Lage 3,19
4. Lage (Funktionslage) d'''Innendurchmesser Lage 7
5. Lage (Funktionslage) d^{IV}Innendurchmesser Lage 8,20
6. Lage (Funktionslage) d^{V}Innendurchmesser Lage 8,20
7. Lage (Funktionslage) D Außendurchmesser Laufbuchse
8. Lage (Decklage) ds Innendurchmesser Stopperelement 11
9. Vollsicke ds' Innendurchmesser Stopperelement 14
10. Vollsicke
11. Stopperelement
12. Vollsicke
13. Vollsicke
14. Auflage
15. radiale Ebene
16. Zylinderkopfdichtung
17. Lage (Funktionslage)
18. Lage (Funktionslage)
19. Lage (Funktionslage)
20. Lage (Decklage)
21. Vollsicke
22. Vollsicke
23. Vollsicke
24. Stopperelement
25. Auflage

## Patentansprüche

1. Dichtungsanordnung, enthaltend eine mehrlagige Zylinderkopfdichtung und Zylinderlaufbuchsen (2) für Brennkraftmaschinen, mit mindestens einer zylinderblockseitig angeordneten ersten Lage (4, 17), die entsprechend den Brennkammern der Brennkraftmaschine Durchgangsöffnungen aufweist und mit einem Durchmesser (d) versehen ist, der minimal dem Außendurchmesser (D) der Laufbuchse (2) entspricht, mindestens einer sich daran anschließenden weiteren Lage (5, 6, 7, 18, 19), deren Durchgangsöffnung einen Durchmesser (d',d",d"') aufweist, der kleiner als der Durchmesser (d) der ersten Lage (4, 17) ausgebildet ist, derart, dass sich die weitere Lage (5, 6, 7, 18, 19) bis in den Bereich der radialen Wandstärke (a) der Laufbuchse (2) erstreckt, mindestens einem mit mindestens einer der weiteren Lagen (5, 6, 7, 18, 19) in Wirkverbindung stehenden ringförmigen Stopperelement (11, 24), **dadurch gekennzeichnet, dass** das Stopperelement (11,24) einen Außendurchmesser (ds, ds') aufweist, der größer ist als der Durchmesser (d) der ersten Lage (4, 17) und einen Innendurchmesser aufweist, der im Wesentlichen dem Durchmesser (d', d", d''') der weiteren Lage (5, 7, 18, 19) entspricht, so dass im Einbauzustand das Stopperelement (11, 24) die erste Lage (4, 17) radial überdeckt und die Zylinderlaufbuchsen (2) aus dem Verspannungsverbund entkoppelt sind.

2. Dichtungsanordnung nach Anspruch 1, **dadurch gekennzeichnet, dass** das jeweilige Stopperelement (11, 24) durch Schweißen mit der jeweiligen weiteren Lage (5, 7, 18, 19) verbunden ist.

3. Dichtungsanordnung nach einem der Ansprüche 1 bis 2, **dadurch gekennzeichnet, dass** der Durchmesser (d', d", d"') der weiteren Lagen (5, 6, 7, 18, 19) etwa dem Innendurchmesser der Laufbuchse (2) entspricht.

4. Dichtungsanordnung nach einem der Ansprüche 1 bis 3, **dadurch gekennzeichnet, dass** zumindest die erste Lage (4, 17) mit einer umlaufenden Sicke (9, 21) versehen ist.

5. Dichtungsanordnung nach einem der Ansprüche 1 bis 4, **dadurch gekennzeichnet, dass** zumindest eine der weiteren Lagen (5, 6, 7, 18, 19), mit einer umlaufenden Sicke (10, 12, 13, 22, 23) versehen ist.

6. Dichtungsanordnung nach einem der Ansprüche 1 bis 5, **dadurch gekennzeichnet, dass** die jeweilige Sicke (9, 10, 12, 13, 21, 22, 23) als Vollsicke ausgebildet ist.

7. Dichtungsanordnung nach einem der Ansprüche 1 bis 6, **dadurch gekennzeichnet, dass** die jeweilige Sicken (9, 10, 12, 13, 21, 22, 23) der einzelnen Lagen (4, 5, 6, 7, 17, 18, 19) im Wesentlichen in gleicher radialer Ebene (15), umgekehrt aufeinander liegend, vorgesehen sind.

8. Dichtungsanordnug nach einem der Ansprüche 1 bis 7, **dadurch gekennzeichnet, dass** zumindest eine weitere Lage (7, 19) mit einer Auflage (14, 25) versehen ist.

9. Dichtungsanordnung nach Anspruch 8, **dadurch gekennzeichnet, dass** die Auflage (14, 25) umlaufend ausgebildet ist.

10. Dichtungsanordnung nach einem der Ansprüche 1 bis 9, **dadurch gekennzeichnet, dass** die Auflage (14) der weiteren Lage (7) zumindest von ihrer Abmessung her, dem Stopperelement (11) der weiteren Lage (5) entspricht und im Wesentlichen in der gleichen radialen Ebene angeordnet ist.

11. Dichtungsanordnung nach einem der Ansprüche 1 bis 10, **dadurch gekennzeichnet, dass** die zylinderkopfseitige Lage (8, 20) einen Durchmesser (d^{IV}, d^{V}) aufweist, der dem Durchmessers (d) der ersten Lage (4, 17) entspricht.

## Claims

1. Gasket arrangement, containing a multilayer cylinder head gasket and cylinder sleeves (2) for internal combustion engines, having at least one first layer (4, 17), disposed on the cylinder block side, which has through-openings corresponding to the combustion chambers of the internal combustion engine and is provided with a diameter (d) which corresponds at least to the outer diameter (D) of the sleeve (2), having at least one further layer (5, 6, 7, 18, 19) adjacent thereto, the through-opening of which has a diameter (d', d", d"') which is configured to be smaller than the diameter (d) of the first layer (4, 17) in such a manner that the further layer (5, 6, 7, 18, 19) extends into the region of the radial wall thickness (a) of the sleeve (2), having at least one annular stopper element (11, 24) which is in operational connection with at least one of the further layers (5, 6, 7, 18, 19), **characterised in that** the stopper element (11, 24) has an outer diameter (ds, ds') which is greater than the diameter (d) of the first layer (4, 17) and has an inner diameter which corresponds essentially to the diameter (d', d", d"') of the further layer (5, 7, 18, 19) so that, in the installed state, the stopper element (11, 24) covers the first layer (4, 17) radially and the cylinder sleeves (2) are decoupled from the clamping bond.

2. Gasket arrangement according to claim 1, **characterised in that** the respective stopper element (11, 24) is connected to the respective further layer (5, 7, 18, 19) by welding.

3. Gasket arrangement according to one of the claims 1 to 2, **characterised in that** the diameter (d', d", d"') of the further layers (5, 6, 7, 18, 19) corresponds approximately to the inner diameter of sleeve (2).

4. Gasket arrangement according to one of the claims 1 to 3, **characterised in that** at least the first layer (4, 17) is provided with a circumferential bead (9, 21).

5. Gasket arrangement according to one of the claims 1 to 4, **characterised in that** at least one of the further layers (5, 6, 7, 18, 19) is provided with a circumferential bead (10, 12, 13, 22, 23).

6. Gasket arrangement according to one of the claims 1 to 5, **characterised in that** the respective bead (9, 10, 12, 13, 21, 22, 23) is configured as a full bead.

7. Gasket arrangement according to one of the claims 1 to 6, **characterised in that** the respective beads (9, 10, 12, 13, 21, 22, 23) of the individual layers (4, 5, 6, 7, 17, 18, 19) are provided essentially in the same radial plane (15), situated one upon the other in reverse.

8. Gasket arrangement according to one of the claims 1 to 7, **characterised in that** at least one further layer (7, 19) is provided with a top layer (14, 25).

9. Gasket arrangement according to claim 8, **characterised in that** the top layer (14, 25) has a circumferential configuration.

10. Gasket arrangement according to one of the claims 1 to 9, **characterised in that** the top layer (14) of the further layer (7), at least with respect to its dimension, corresponds to the stopper element (11) of the further layer (5) and is disposed essentially in the same radial plane.

11. Gasket arrangement according to one of the claims 1 to 10, **characterised in that** the layer (8, 20) on the cylinder head side has a diameter (d^{IV}, d^{V}) which corresponds to the diameter (d) of the first layer (4, 17).

## Revendications

1. Dispositif d'étanchéité comprenant un joint de culasse à plusieurs couches et des chemises de cylindres (2) pour des moteurs à combustion interne, avec au moins une première couche (4, 17) disposée du côté du bloc-cylindres qui comporte des ouvertures de passage correspondant aux chambres de combustion du moteur à combustion interne et qui présente un diamètre (d) qui correspond au moins au diamètre extérieur (D) de la chemise de cylindre (2), avec au moins une autre couche adjacente (5, 6, 7, 18, 19) dont l'ouverture de passage présente un diamètre (d', d", d''') qui est plus petit que le diamètre (d) de la première couche (4, 17) de telle manière que l'autre couche (5, 6, 7, 18, 19) s'étend jusque dans la zone de l'épaisseur de paroi radiale (a) de la chemise de cylindre (2), avec au moins un élément de butée annulaire (11, 24) en liaison active avec au moins l'une des autres couches (5, 6, 7, 18, 19), **caractérisé en ce que** l'élément de butée (11, 24) présente un diamètre extérieur (ds, ds') qui est plus grand que le diamètre (d) de la première couche (4, 17) et un diamètre intérieur qui correspond sensiblement au diamètre (d', d", d''') de l'autre couche (5, 7, 18, 19), de sorte qu'à l'état monté, l'élément de butée (11, 24) recouvre radialement la première couche (4, 17) et les chemises de cylindre (2) sont désaccouplées de la liaison par contrainte.

2. Dispositif d'étanchéité selon la revendication 1, **caractérisé en ce que** l'élément de butée respectif (11, 24) est relié par soudure à l'autre couche respective (5, 7, 18, 19).

3. Dispositif d'étanchéité selon l'une quelconque des revendications 1 à 2, **caractérisé en ce que** le diamètre (d', d", d"') des autres couches (5, 6, 7, 18, 19) correspond à peu près au diamètre intérieur de la chemise de cylindre (2).

4. Dispositif d'étanchéité selon l'une quelconque des revendications 1 à 3, **caractérisé en ce qu'**au moins la première couche (4, 17) est munie d'une moulure périphérique (9, 21).

5. Dispositif d'étanchéité selon l'une quelconque des revendications 1 à 4, **caractérisé en ce qu'**au moins l'une des autres couches (5, 6, 7, 18, 19) est munie d'une moulure périphérique (10, 12, 13, 22, 23).

6. Dispositif d'étanchéité selon l'une quelconque des revendications 1 à 5, **caractérisé en ce que** la moulure respective (9, 10, 12, 13, 21, 22, 23) est réalisée sous la forme d'une moulure pleine.

7. Dispositif d'étanchéité selon l'une quelconque des revendications 1 à 6, **caractérisé en ce que** les moulures respectives (9, 10, 12, 13, 21, 22, 23) des couches individuelles (4, 5, 6, 7, 17, 18, 19) sont prévues sensiblement dans le même plan radial (15), disposées à l'envers les unes sur les autres.

8. Dispositif d'étanchéité selon l'une quelconque des revendications 1 à 7, **caractérisé en ce qu'**au moins une autre couche (7, 19) est munie d'un support (14, 25).

9. Dispositif d'étanchéité selon la revendication 8, **caractérisé en ce que** le support (14, 25) est périphérique.

10. Dispositif d'étanchéité selon l'une quelconque des revendications 1 à 9, **caractérisé en ce que** le support (14) de l'autre couche (7) correspond, au moins du point de vue de ses dimensions, à l'élément de butée (11) de l'autre couche (5) et **en ce qu'**il est disposé sensiblement dans le même plan radial.

11. Dispositif d'étanchéité selon l'une quelconque des revendications 1 à 10, **caractérisé en ce que** la couche du côté de la culasse (8, 20) présente un diamètre (d^{IV}, d^{V}) qui correspond au diamètre (d) de la première couche (4, 17).
